(19) Europäisches Patentamt / European Patent Office / Office européen des brevets

(11) **EP 2 872 313 B1**

(12) **FASCICULE DE BREVET EUROPEEN**

(45) Date de publication et mention
de la délivrance du brevet:
**01.09.2021 Bulletin 2021/35**

(21) Numéro de dépôt: **13756557.8**

(22) Date de dépôt: **09.07.2013**

(51) Int Cl.:
**B29C 49/78** *(2006.01)*     **B29C 49/12** *(2006.01)*

(86) Numéro de dépôt international:
**PCT/FR2013/051640**

(87) Numéro de publication internationale:
**WO 2014/009653 (16.01.2014 Gazette 2014/03)**

(54) **INSTALLATION DE FABRICATION DE RÉCIPIENTS AVEC UN SYSTÈME DE COMMANDE MODULAIRE**

ANLAGE ZUR HERSTELLUNG VON CONTAINERN MIT EINEM MODULAREN KONTROLLIERSYSTEM

INSTALLATION FOR PRODUCING CONTAINERS WITH A MODULAR CONTROL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2012 FR 1256833**

(43) Date de publication de la demande:
**20.05.2015 Bulletin 2015/21**

(73) Titulaire: **Sidel Participations**
**76930 Octeville-sur-Mer (FR)**

(72) Inventeur: **DEAU, Thierry**
**F-76930 Octeville Sur Mer (FR)**

(74) Mandataire: **Sidel Group**
**c/o Sidel Participations**
**Avenue de la Patrouille de France**
**76930 Octeville-sur-mer (FR)**

(56) Documents cités:
**EP-A2- 1 306 195        WO-A1-97/11415**
**WO-A1-2006/089451   DE-A1-102010 033 171**
**JP-A- 4 184 502        US-A1- 2008 097 626**
**US-A1- 2010 176 528**

**Description**

L'invention a trait au domaine de la fabrication des récipients à partir d'ébauches en matière thermoplastique tel que PET (polyéthylène téréphtalate), le terme « ébauche » couvrant tout autant une préforme venue d'injection qu'un récipient intermédiaire ayant subi une ou plusieurs opérations temporaires de formage.

La fabrication des récipients est généralement accomplie au sein d'une installation qui comprend plusieurs unités de traitement des ébauches ou des récipients, typiquement une unité de chauffe des ébauches à une température supérieure à la température de transition vitreuse de la matière, ou encore une unité de formage des récipients à partir des ébauches chaudes, par soufflage ou étirage soufflage dans des moules par injection d'un fluide (notamment un gaz tel que de l'air) sous pression.

Le formage des récipients à l'échelle industrielle impose des temps de cycles extrêmement brefs. Pour une cadence ordinaire de production moderne, de l'ordre de 50 000 récipients par heure, le temps de cycle, mesuré entre l'introduction de l'ébauche dans le moule et l'évacuation du récipient formé, est compris entre 1 seconde et 2 secondes seulement.

Une mauvaise prise d'empreinte et une mauvaise répartition de la matière (souvent corrélées) sont des défauts de forme fréquents. Il est connu que ces défauts peuvent être liés à divers paramètres machine, notamment la température de chauffe des ébauches, la pression et le débit de fluide, ou encore la vitesse d'étirage. Ces corrélations sont étudiées notamment dans les documents WO 2008/081107 et WO 2012/035260 au nom de la demanderesse. "Par ailleurs, le document WO97/11415 décrit un système pour automatiser la régulation d'une machine de soufflage. Les documents WO2006/089451 et US2008/097626 décrivent un dispositif et un procédé de pilotage d'une machine de production. Le document US2010/176528 décrit un procédé de production d'un récipient par soufflage d'une préforme.

Le réglage de chaque unité de traitement est classiquement confié à un opérateur spécialisé chargé de vérifier que le traitement est réalisé conformément à une consigne prédéfinie (cette consigne comprend par exemple, dans l'unité de chauffe, la température de chauffe, la vitesse de défilement des ébauches ou encore la puissance d'une ventilation assurant l'évacuation d'une partie de la chaleur ; dans l'unité de formage, la consigne comprend notamment la pression d'injection, la vitesse d'étirage, la température de régulation du moule).

Des corrections manuelles sont généralement appliquées à la consigne (dans la mesure où les paramètres sont réglables) en fonction de la qualité perçue des récipients appréciée de manière subjective par l'opérateur. L'application de ces corrections est un problème délicat, compte tenu notamment du caractère subjectif de la qualité perçue et du nombre limité de récipients contrôlés au regard des cadences de production (plusieurs dizaines de milliers par heure). De fait, le temps écoulé entre le constat d'un défaut sur une série de récipients et l'application effective d'une consigne modifiée manuellement par l'opérateur peut aboutir à la mise au rebut de plusieurs centaines de récipients produits dans l'intervalle.

Une automatisation des réglages est à l'étude, grâce à une analyse stricte et systématique de courbes caractérisant l'évolution de paramètres tels que la température des ébauches à la sortie de l'unité de chauffe, réalisée au moyen de caméras thermiques, ou encore la pression d'injection, réalisée dans le moule au moyen de capteurs de pression, cf. les documents précités.

Cette automatisation pose toutefois des difficultés de mise en oeuvre, notamment lorsqu'une dérive constatée sur une unité de traitement nécessite une rétroaction transversale, c'est-à-dire une modification de la consigne appliquée à une autre unité de traitement. En pratique, ce problème survient par exemple lorsqu'on souhaite recaler une courbe de soufflage (c'est-à-dire une courbe montrant, sur un cycle, l'évolution de la pression mesurée dans le moule, paramètre lié à l'unité de formage) sur une courbe théorique en corrigeant un paramètre lié à l'unité de chauffe (typiquement la température de chauffe, réglée par modification de la puissance d'émission de sources de rayonnement électromagnétique devant lesquelles défilent les ébauches).

A ce jour, il n'existe pas de solution permettant de procéder de manière fiable et automatisée à une telle rétroaction transversale.

Un premier objet de l'invention est d'optimiser le contrôle d'une installation de fabrication de récipients.

Un deuxième objet de l'invention est d'optimiser la qualité des récipients produits.

Un troisième objet est, plus précisément, de permettre une rétroaction transversale des diverses unités de traitement de l'installation, en fonction de dérives constatées dans la production.

A cet effet, il est proposé une installation selon la revendication 1.

L'architecture du système de commande permet notamment de diviser les tâches de contrôle au sein d'une installation de fabrication de récipients, au bénéfice d'un meilleur contrôle de l'installation, et de la qualité des récipients produits.

Diverses caractéristiques supplémentaires peuvent être prévues, seules ou en combinaison :

- l'unité centrale de contrôle est programmée pour :

  - piloter chaque unité de contrôle asservie selon une consigne de traitement chargée dans l'unité de contrôle,
  - prendre en compte au moins un point caractéristique à l'unité centrale par l'unité de contrôle,
  - comparer ce point caractéristique avec un point théorique,

- si un écart est décrété entre le point caractéristique et le point théorique, édicter une consigne de traitement corrigée à destination d'une deuxième unité de contrôle,
- charger la consigne de traitement corrigée dans la deuxième unité de contrôle ;

- chaque unité de contrôle est programmée pour :

  - piloter chaque contrôleur asservi selon la consigne de traitement chargée par l'unité centrale,
  - prendre en compte au moins un point singulier issu d'une mesure effectuée sur au moins un poste de traitement sur commande d'un contrôleur,
  - calculer un point caractéristique fonction du ou des points singuliers,
  - comparer le point caractéristique avec un point théorique,
  - si un écart est décrété entre le point caractéristique et le point théorique justifiant une modification de la consigne de traitement d'une autre unité de traitement, communiquer le point caractéristique à l'unité centrale de contrôle ;

- chaque contrôleur est programmé pour :

  - piloter au moins un poste de traitement selon la consigne de traitement,
  - commander au moins une mesure au niveau du poste de traitement,
  - à partir de cette mesure, établir une courbe décrivant une variation de cette mesure,
  - analyser la courbe et en extraire les coordonnées d'un point singulier,
  - communiquer le point singulier à l'unité de contrôle.

D'autres objets et avantages de l'invention apparaîtront à la lumière de la description d'un mode préféré de réalisation, faite ci-après en référence aux dessins annexés dans lesquels :

- la figure 1 est une vue schématique montrant une installation de fabrication de récipients, comprenant une unité de formage et une unité de chauffe ;
- la figure 2 est une vue schématique illustrant plus en détail l'architecture de l'installation ;
- la figure 3 est une vue schématique illustrant les positions angulaires d'une roue de l'unité de formage ;

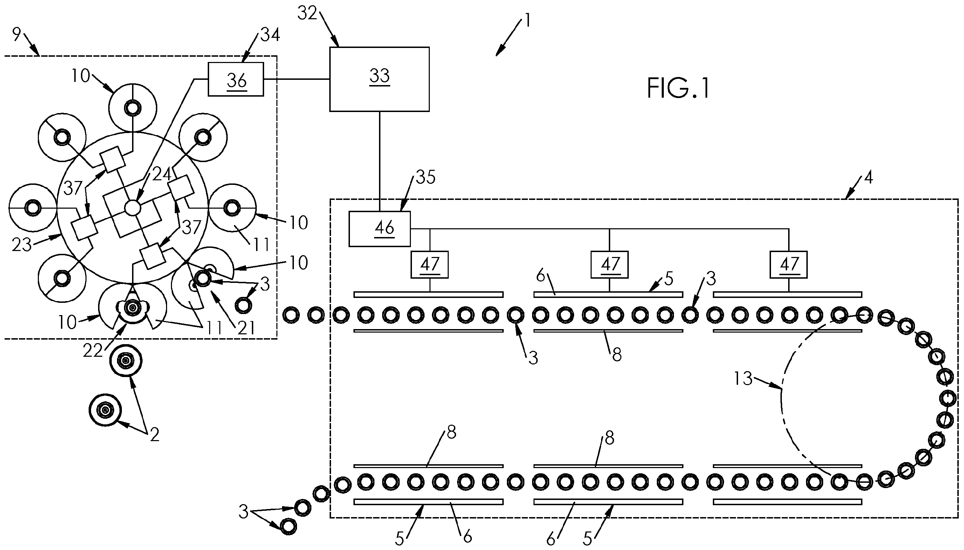

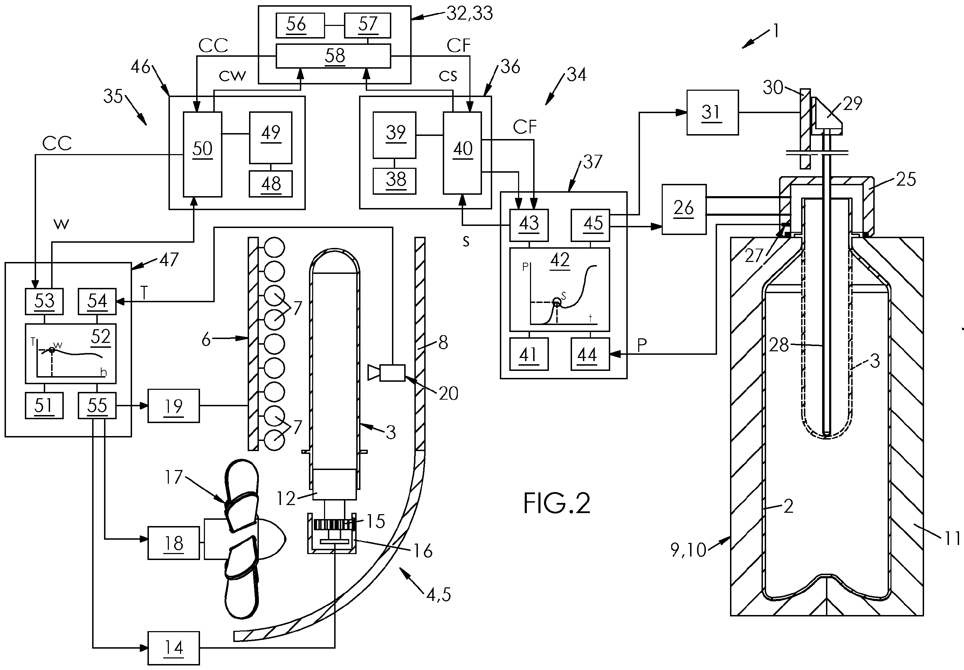

On a représenté schématiquement sur les figures 1 et 2 une installation **1** de fabrication de récipients **2** à partir d'ébauches **3** en matière thermoplastique, par exemple en PET (polyéthylène téréphtalate).

L'installation **1** comprend au moins deux unités **4, 9** de traitement des récipients **2** ou des ébauches **3**. Pour simplifier, on suppose dans ce qui suit que les ébauches **3** sont des préformes.

Typiquement, comme dans l'exemple illustré, l'installation comprend :

- une unité **4** de chauffe ou four, qui comprend une série de modules **5** de chauffe ayant chacun une paroi **6** rayonnante munie de sources **7** superposées de rayonnement infrarouge et une paroi **8** réfléchissante placée en face de la paroi **6** rayonnante pour réfléchir la portion de rayonnement non absorbé par les préformes **3**,
- une unité **9** de formage par soufflage ou étirage soufflage, équipée d'au moins un poste **10** (et en l'espèce d'une série de postes) de formage, le ou chaque poste **10** de formage étant muni d'un moule **11** à l'empreinte d'un récipient.

De manière classique, les préformes **3** à température ambiante sont introduites dans le four **4** par une entrée de celui-ci, par exemple au moyen d'une roue ou d'un convoyeur d'alimentation. Puis les préformes **3** sont chauffées au défilé dans le four **4** à une température supérieure à la température de transition vitreuse de la matière (la température finale des ébauches est de l'ordre de 120°C pour le PET, dont la température de transition vitreuse est d'environ 80°C).

Dans le four **4**, les préformes **3** sont par exemple montées sur des supports **12** pivotants ou tournettes. Chaque tournette **12** est montée sur une chaîne circulant sur une roue **13** motrice entraînée en rotation par un moteur **14**. La tournette **12** est munie d'un pignon **15** qui engrène une crémaillère **16** pour entraîner la tournette **12** en rotation pendant son défilement dans le four **4** et ainsi exposer la surface de chaque préforme **3** au rayonnement.

Pour évacuer au moins une partie de la chaleur excédentaire produite par la paroi **6** rayonnante, le four **4** peut être équipé d'un système d'extraction comprenant par exemple un ventilateur **17** entraîné par un moteur **18** et positionné au droit des cols des préformes **3**.

En outre, la puissance du rayonnement émis par la paroi **6** rayonnante peut être modulée au moyen d'un variateur **19** de puissance, comme dans l'exemple de réalisation illustré sur la figure 2.

Le profil thermique des préformes **3** est de préférence contrôlé, soit directement dans le four **4** soit en sortie de celui-ci, au moyen d'un capteur **20** thermique. Selon un mode de réalisation illustré sur la figure **2**, le capteur **20** thermique est une caméra thermique pointant vers les préformes **3**.

A la sortie du four **4**, les préformes **3** ainsi chauffées sont transférées vers l'unité **9** de formage via une unité de transfert (telle qu'une roue de transfert) pour être soufflées ou étirées soufflées individuellement dans un moule **11**. Les préformes **3** sont introduites dans l'unité **9** de formage en un point **21** de charge.

A l'issue du formage, les récipients **2** sont évacués des moules **11** depuis un point **22** de décharge en vue d'être directement remplis et étiquetés, ou stockés temporairement en vue d'être remplis et étiquetés ultérieurement. Une fois remplis et étiquetés, les récipients sont groupés et conditionnés, par exemple au sein d'une unité de fardelage qui enveloppe chaque groupe de récipients au moyen d'un film thermorétractable.

Comme on le voit également sur les figures 1 et 2, l'unité **9** de formage comprend une roue **23** pivotante sur laquelle sont montés les postes **10** de formage, et un capteur **24** de la position angulaire instantanée de la roue **23,** sous forme par exemple d'un codeur (c'est-à-dire, en pratique, un roulement instrumenté).

Chaque poste **10** de formage est équipé d'une tuyère **25** par laquelle un fluide (notamment un gaz tel que de l'air) est injecté dans le moule **11**. Chaque poste **10** de formage est également équipé d'un dispositif d'injection comprenant un bloc **26** d'actionneurs relié à la tuyère **25** pour commander l'injection du fluide. En outre, chaque poste **10** de formage est muni d'un dispositif **27** de mesure de la pression régnant dans le récipient en cours de formage. Dans l'exemple illustré, le dispositif **27** de mesure comprend un capteur de pression monté au niveau de la tuyère **25,** dans laquelle la pression en cours de formage est identique à la pression régnant dans le récipient **2**.

Selon un mode de réalisation correspondant à un procédé de formage par étirage soufflage, chaque poste **10** de formage comprend en outre une tige **28** d'étirage mobile, solidaire d'un chariot **29** monté en translation par rapport à un support **30**.

Le mouvement de la tige **28** est commandé de manière électromagnétique. A cet effet, le support **30** comprend une piste électromagnétique reliée à un moteur **31,** et le chariot **29** est lui-même magnétique. Le signe et la puissance du courant traversant la piste permettent de déplacer la tige **28** suivant un profil de déplacement prédéterminé, comprenant une direction et une vitesse de déplacement.

Comme illustré sur la figure 1, les postes **10** de formage décrivent un trajet (en l'espèce circulaire) qui inclut un secteur F de formage s'étendant depuis le point **21** de charge des préformes **3** jusqu'au point **22** de décharge des récipients **2** formés, et un secteur T tampon, complémentaire du secteur F de formage et s'étendant depuis le point **22** de décharge jusqu'au point de charge **21.**

L'installation **1** est équipée d'un système **32** de commande comprenant une unité **33** centrale de contrôle de l'installation **1** et, pour chaque unité **4, 9** de traitement, un système **34, 35** de commande dédié qui pilote de manière automatique le fonctionnement de l'unité **9, 4** respective.

Ainsi, l'unité **9** de formage est équipée d'un système **34** de commande dédié qui comprend une unité **36** de contrôle maître et une série de contrôleurs **37** esclaves asservis à l'unité **36** de contrôle maître.

L'unité **36** de contrôle maître est informatisée et comprend, comme illustré sur la figure 2 :

- une mémoire **38** dans laquelle sont inscrits des programmes de pilotage de l'unité **9** de formage,
- un processeur **39** relié à la mémoire **38** pour appliquer les instructions des programmes, et
- une interface **40** de communication reliée au processeur **39** pour la communication avec des entités communicantes externes, comme cela sera expliqué ci-après.

Chaque contrôleur **37** esclave est un contrôleur logique programmable, du type décrit dans W. Bolton, Programmable Logic Controllers, Newnes, cinquième édition, 2009.

Plus précisément, chaque contrôleur **37** comprend :

- une mémoire **41** dans laquelle sont inscrits des programmes de pilotage d'au moins un poste **10** de formage,
- un processeur **42** relié à la mémoire **41** pour appliquer les instructions du programme,
- une interface **43** de communication reliée au processeur **42** pour la communication avec l'unité **36** de contrôle maître via l'interface **40** de communication,
- une interface **44** d'entrée reliée d'une part au processeur **42** et d'autre part au dispositif **27** de mesure de la pression, notée P, régnant dans le moule **11,**
- une interface **45** de sortie reliée d'une part au processeur **42** et d'autre part au bloc **26** d'actionneurs et au moteur **31** de commande de la tige **28** d'étirage.

En variante, les interfaces **44, 45** d'entrée et de sortie sont rassemblées au sein d'une interface unitaire d'entrée/sortie.

Le contrôleur **37** est programmé pour effectuer les opérations suivantes :

- piloter le poste **10** de formage auquel il est associé (ou chaque poste **10** de formage auquel il est associé ; le contrôleur **37** peut par exemple être associé à deux postes **10** de formage) pour l'accomplissement d'un cycle complet de formage le long du secteur F de formage, depuis le chargement d'une préforme **3** au point **21** de charge jusqu'au déchargement du récipient **2** formé au point **22** de décharge, selon une consigne CF de formage chargée (c'est-à-dire inscrite) dans la mémoire **41** ;
- prendre en compte une mesure de la pression P dans le moule **11**. La mesure de pression est réalisée par le capteur **27** de pression en continu ou de manière séquentielle et régulière, à intervalles prédéterminés (par exemple de 5 ms) et communiquée au processeur **42** via l'interface **44** d'entrée ;
- à partir de la mesure de pression, établir pendant le cycle de formage une courbe de soufflage décrivant l'évolution de la pression P de fluide dans le moule **11** à chaque instant, noté t (en pratique aux instants, mesurés par l'horloge interne du processeur **42,** correspondant aux positions angulaires fournies par le capteur **27**), cette courbe (visible schématiquement sur la figure 2) étant établie par le processeur **42** et mémorisée au cours du cycle ;

- analyser en fin de cycle la courbe de soufflage et en extraire les coordonnées d'au moins un point S singulier (notamment un pic local de pression, typiquement un point B tel que défini dans la demande internationale WO 2008/081107) ;
- communiquer dès la fin du cycle les coordonnées du point singulier à l'unité **36** de contrôle maître.

La consigne de formage peut comprendre des valeurs de pression et/ou de débit du fluide délivré par le bloc **26** d'actionneurs, ou encore un profil de déplacement de la tige **28** ou de toute autre pièce mobile (par exemple un fond de moule couplé à la tige **28**), sous forme par exemple d'une courbe de vitesse de déplacement de la tige **28** (ou de toute autre pièce mobile) en fonction de sa position. La vitesse de déplacement de la tige **28** (ou de toute autre pièce mobile) peut être convertie par le processeur **42** du contrôleur **37** en puissance à délivrer par le moteur **31**. La consigne est appliquée par le processeur **42**, qui pilote le bloc **26** d'actionneurs et le moteur **31** via l'interface de sortie.

Le processeur **39** de l'unité **36** de contrôle maître est, quant à lui, programmé pour :

- piloter ses contrôleurs **37** esclaves,
- prendre en compte le ou chaque point S singulier communiqué par chaque contrôleur **37** à la fin du cycle accompli par le ou chaque poste **10** de formage associé,
- calculer un point CS caractéristique à partir du ou des point(s) S singulier(s). Ce point CS caractéristique peut être le point S singulier lui-même, communiqué au cours d'un cycle unique par un contrôleur **37,** ou une moyenne de points S singuliers communiqués au cours de plusieurs cycles successifs par un même contrôleur **37,** ou une moyenne de points S singuliers communiqués au cours d'un cycle unique par plusieurs contrôleurs **37,** ou encore une moyenne de points S singuliers communiqués au cours de plusieurs cycles successifs par plusieurs contrôleurs **37** ;
- comparer ce point CS caractéristique, issu (ou calculé à partir) des mesures, avec un point théorique inscrit préalablement dans la mémoire **38** de l'unité **36** de contrôle maître et correspondant à un récipient modèle,
- si un écart est décrété entre le point CS caractéristique et le point théorique, édicter une consigne CF de formage corrigée, comprenant une valeur de pression et/ou de débit de fluide modifiée à délivrer par le bloc **26** d'actionneurs, ou un instant de commande du bloc **26** d'actionneurs, ou encore un profil de déplacement de la tige **28** (par exemple sous forme d'une courbe de vitesse de la tige **28** ou d'une courbe de puissance du moteur **31,** en fonction de la position de la tige **28**) ou d'une autre pièce mobile ;
- charger la consigne CF de formage corrigée dans le ou chaque contrôleur **37** piloté par l'unité **36** de contrôle maître,
- le cas échéant, communiquer le point CS caractéristique à l'unité **33** centrale de contrôle.

Lorsqu'aucun écart n'est décrété entre le point CS caractéristique et le point théorique, aucune consigne de formage corrigée n'est édictée par le processeur **39,** de sorte que pour le nouveau cycle de formage ou plusieurs cycles de formage ultérieurs, le contrôleur **37** esclave applique la consigne CF de formage du (ou des) cycle(s) précédent(s).

Dans l'hypothèse, évoquée ci-dessus, d'une correction de la consigne CF de formage, la nouvelle consigne CF est chargée dans le contrôleur **37** esclave lorsque le poste **10** de formage associé se trouve dans le secteur T tampon, de sorte à pouvoir être appliquée pour le cycle de formage suivant, dès le chargement d'une nouvelle préforme **2** au point **21** de charge.

L'information de position angulaire de la roue **23** est commune aux contrôleurs **37** et partagée. Elle peut être centralisée au niveau de l'unité **36** de contrôle maître, dont le processeur **39** est dans ce cas programmé pour communiquer, à intervalles prédéterminés (notamment de quelques millisecondes, par exemple 1 ms), via son interface **40** de communication, la position angulaire instantanée de la roue **23,** telle que mesurée par le capteur **24** de position angulaire dans un référentiel de coordonnées polaires centré sur l'axe de rotation de la roue, noté O.

Toutefois, selon un mode de réalisation préféré, le capteur **24** est relié directement, via un réseau informatique local (LAN) à l'ensemble des contrôleurs **37.** Dans ce cas, afin que l'information transmise par le capteur **24** via le réseau soit lisible par les contrôleurs, le capteur **24** intègre de préférence un convertisseur analogique / numérique.

Chaque contrôleur **37** esclave est quant à lui programmé pour :

- prendre en compte la position angulaire instantanée de la roue **23** dès que cette position lui est communiquée par l'unité **36** de contrôle maître ou directement par le capteur **24** de position angulaire,
- en déduire la position angulaire du ou de chaque poste **10** de formage associé au contrôleur **37** esclave et piloté par celui-ci, et
- établir la courbe de soufflage à partir des pressions mesurées dans la tuyère **25** de chaque moule associé, aux instants correspondant à chacune de ces positions angulaires.

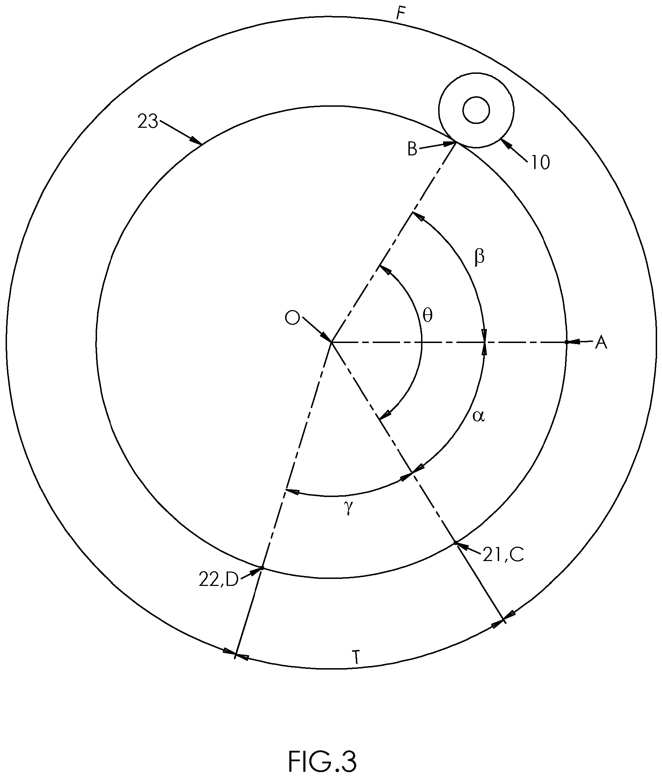

Le calcul de la position angulaire instantanée de chaque poste **10** de formage peut être réalisé de la manière simple suivante, en prenant comme référence (c'est-à-dire l'angle nul) le point **21** de charge (également noté C sur la figure 3).

On note A un point arbitraire fixe sur la roue **23,** considéré comme référence mobile fournissant la position angulaire du point **C** de charge, notée α et fournie par le capteur **24** de position, telle que $\propto = \widehat{COA}.$

On note B le point correspondant à la position angulaire relative, notée β, du poste **10** de formage, mesurée par rapport au point A et telle que $\beta = \widehat{AOB}.$

En notant θ la position angulaire absolue du poste **10** de formage dans le référentiel polaire fixe ayant pour origine l'axe OC, cette position θ angulaire est telle que $\theta = \widehat{COB} = \widehat{COA} + \widehat{AOB} = \alpha + \beta.$

On note D le point **22** de décharge (fixe dans le référentiel polaire d'axe OC), dont la position angulaire, notée γ, est telle que $\gamma = \widehat{COD}.$

Ainsi, pour tout poste **10** de formage, le processeur **39** du contrôleur associé, dans la mémoire **38** duquel sont inscrites les valeurs des angles β et γ, est à chaque instant capable de calculer l'angle θ par la formule indiquée ci-dessus et de déterminer si le poste **10** de formage se trouve dans le secteur F de formage, dans lequel $0 \le \theta \le 2\pi$-γ (les angles étant exprimés en radians), ou dans le secteur T tampon, dans lequel θ > 2π-γ.

Il résulte de l'architecture du système **34** de commande que les tâches nécessaires au fonctionnement de l'unité **9** de formage sont partagées entre l'unité **36** de contrôle maître et les contrôleurs **37** esclaves qui lui sont asservis.

Les tâches dévolues aux contrôleurs **37** comprennent le pilotage effectif des postes **10** de formage (notamment deux postes **10** par chaque contrôleur **37**), la prise de mesure et l'analyse de ces mesures pour en déduire des points S singuliers. Ces tâches sont effectuées en temps réel, au fur et à mesure de l'avancement du cycle, et nécessitent un traitement rapide.

Les tâches dévolues à l'unité **36** de contrôle comprennent l'analyse des données communiquées à chaque fin de cycle par les contrôleurs **37,** la prise de décision quant à l'opportunité de corriger ou non les consignes CF de formage, ainsi que l'éventuelle édiction et chargement de consignes CF de formage corrigées. Ces tâches sont effectuées pour chaque poste **10** de formage en différé, pendant que celui-ci parcourt le secteur T tampon lorsque les corrections de consigne sont prévues pour être appliquées d'un cycle à l'autre, ou pendant plusieurs cycles, lorsque l'unité **36** de contrôle effectue des calculs de points caractéristiques sur la base de moyennes de mesures effectuées sur plusieurs cycles.

Ce partage des tâches permet de limiter à la fois le volume de données à traiter et la vitesse à laquelle ces données doivent être traitées par l'unité **36** de contrôle. De la sorte, les calculs nécessaires à la conduite correcte des opérations de formage ne sont pas limitatifs de la cadence de production.

Comme cela est par ailleurs schématisé sur la figure 2, l'unité **4** de chauffe est également équipée d'un système **35** de commande dédié qui comprend une unité **46** de contrôle maître et une série de contrôleurs **47** esclaves asservis à l'unité de contrôle **46** maître.

L'unité **46** de contrôle maître est informatisée et comprend :

- une mémoire **48** dans laquelle sont inscrits des programmes de pilotage des modules **5** de chauffe,
- un processeur **49** relié à la mémoire **48** pour appliquer les instructions des programmes, et
- une interface **50** de communication reliée au processeur **49** pour la communication avec des entités communicantes externes.

Chaque contrôleur **47** esclave est un contrôleur logique programmable, du type décrit dans W. Bolton, Programmable Logic Controllers, Newnes, cinquième édition, 2009.

Plus précisément, chaque contrôleur **47** comprend :

- une mémoire **51** dans laquelle sont inscrits des programmes de pilotage d'au moins un module **5** de chauffe,
- un processeur **52** relié à la mémoire **51** pour appliquer les instructions du programme,
- une interface **53** de communication reliée au processeur **49** pour la communication avec l'unité **46** de contrôle maître via sa propre interface **50** de communication,
- une interface **54** d'entrée reliée d'une part au processeur **52** et d'autre part au capteur **20** thermique,
- une interface **55** de sortie reliée d'une part au processeur **52** et d'autre part au variateur **19** de puissance et aux moteurs **14, 18** du de la roue **13** motrice et du ventilateur **17.**

Le contrôleur **47** est programmé pour effectuer les opérations suivantes :

- piloter le ou chaque module **5** de chauffe auquel il est associé, selon une consigne CC de chauffe chargée (c'est-à-dire inscrite) dans la mémoire **51** ;
- à partir de la mesure de température (notée T) issue du capteur **20** thermique, établir le profil thermique instantané de chaque préforme **3,** qui peut se présenter sous forme d'une température moyenne mesurée pour l'ensemble de la préforme **3,** d'un ensemble de plusieurs valeurs de température à différentes hauteurs sur le corps de la préforme **3,** ou d'une courbe donnant la température T en fonction de la hauteur (notée h) sur la préforme **3** ;
- analyser le profil thermique et en extraire les coordonnées d'au moins un point W singulier (par exemple à une hauteur donnée au voisinage du col) ;

- communiquer pour chaque préforme **3,** ou à intervalles prédéterminés, les coordonnées du point W singulier à l'unité **46** de contrôle maître.

La consigne CC de chauffe peut comprendre une valeur de puissance délivrée par le variateur **19,** une vitesse de rotation du moteur **18** du ventilateur **17,** ou encore une vitesse de rotation de la roue **13** motrice (et donc, par voie de conséquence, une vitesse de défilement des préformes **3** - en d'autres termes la cadence de production du four **4**).

Le processeur **49** de l'unité **46** de contrôle maître est, quant à lui, programmé pour :

- piloter ses contrôleurs **47** esclaves,
- prendre en compte le ou chaque point W singulier communiqué par chaque contrôleur **47,**
- calculer un point CW caractéristique à partir du ou des point(s) W singulier(s). Ce point CW caractéristique peut être le point W singulier communiqué à un instant prédéterminé par le contrôleur **47,** ou une moyenne de points W singuliers communiqués au cours d'une période prédéterminée par un même contrôleur **47** ;
- comparer ce point CW caractéristique avec un point théorique inscrit préalablement dans la mémoire **48** de l'unité **46** de contrôle maître et correspondant à une préforme ayant donné un récipient modèle,
- si un écart est décrété entre le point CW caractéristique et le point théorique, édicter une consigne CC de chauffe corrigée, comprenant une valeur modifiée pour la puissance du variateur **19,** ou encore pour la vitesse de rotation du moteur **18** du ventilateur **17** ou de la roue **13** motrice ;
- charger la consigne CC de chauffe corrigée dans le ou chaque contrôleur **47** piloté par l'unité **46** de contrôle maître ;
- le cas échéant, communiquer le point CW caractéristique à l'unité **33** centrale de contrôle,

Lorsqu'aucun écart n'est décrété entre le point CW caractéristique et le point théorique, aucune consigne de chauffe corrigée n'est édictée par le processeur, de sorte que le contrôleur **47** poursuit le pilotage du (ou de chaque) module **5** de chauffe selon la consigne CC de chauffe précédente.

Comme cela est illustré sur les figures, l'unité **33** centrale de contrôle de l'installation **1** comprend :

- une mémoire **56** dans laquelle sont inscrit des programmes de pilotage des unités **36, 46** de contrôle des systèmes **34, 35** de commande dédiés, ces unités **36, 46** de contrôle étant ainsi asservies à l'unité **33** centrale de contrôle (en d'autres termes, les unités **36, 46** de contrôle sont maîtres des contrôleurs **37, 47,** et esclaves de l'unité **33** centrale de contrôle) ;
- un processeur **57** relié à la mémoire **56** pour appliquer les instructions des programmes, et
- une interface **58** de communication reliée au processeur **57** pour la communication avec les unités **36, 46** de contrôle.

Le processeur **57** de l'unité **33** centrale de contrôle est programmé pour piloter chaque unité **36, 46** de contrôle, selon une consigne CF, CC de traitement chargée dans le processeur **39, 49** de chaque unité **36, 46** de contrôle.

On a vu que les unités **36, 46** de contrôle peuvent transmettre à l'unité **33** centrale de contrôle les points CS, CW caractéristiques.

Cette transmission permet au processeur **57** de l'unité **33** centrale de contrôle de piloter le fonctionnement de chaque unité **4** (respectivement **9**) de traitement en fonction de mesures issues d'une autre unité de traitement **9** (respectivement **4**).

Plus précisément, le processeur **57** de l'unité **33** centrale de contrôle est programmé pour :

- prendre en compte au moins un point CS, CW caractéristique qui lui est communiqué par une première unité **36** (respectivement **46**) de contrôle,
- comparer ce point caractéristique avec un point théorique inscrit dans la mémoire **56** de l'unité **33** centrale de contrôle,
- si un écart est décrété entre le point singulier et le point théorique, édicter une consigne CC, CF de traitement corrigée à destination d'une deuxième unité **46** (respectivement **36**) de contrôle, et
- charger cette consigne CC, CF de traitement corrigée dans la deuxième unité **46** (respectivement **36**) de contrôle.

Cette séquence d'opérations peut notamment être déclenchée dans le cas où une première correction de consigne effectuée au niveau d'un système **34** (respectivement **35**) de commande dédié à une unité **9** (respectivement **4**) de traitement donnée ne supprime pas (ou ne diminue pas), au cycle suivant (ou sur un nombre prédéterminé de cycles), l'écart constaté entre le point CS, CW caractéristique et le point théorique.

Elle peut également être déclenchée dans le cas où il est connu (et donc programmé) que seule la correction d'une consigne CC, CF de traitement à destination de la deuxième unité **46** (respectivement **36**) de contrôle est susceptible d'affecter (et donc de corriger) les mesures effectuées sur la première unité **9** (respectivement **4**) de traitement.

Dans l'exemple illustré, la qualité du récipient **2** final obtenu en sortie de l'unité **9** de formage dépend notamment de la température T de chauffe, laquelle est réglée dans l'unité **4** de chauffe. La température T de chauffe des préformes **3** peut en effet varier en fonction :

- de l'intensité du rayonnement délivré par les modules **5** de chauffe, laquelle dépend de la puissance électrique qui leur est délivrée, modulée par le variateur **19,**

- de la puissance de la ventilation, réglée par la vitesse de rotation du ventilateur **17,** laquelle est modulée par le moteur **18,**
- de la vitesse de défilement des préformes **3,** laquelle est modulée par le moteur **14** de la roue **13.**

Ainsi, on comprend qu'un changement de consigne CC affectant la température T de chauffe au sein de l'unité **4** de chauffe aura pour conséquence une modification de la courbe de soufflage, et en particulier la position du point S singulier détecté dans celle-ci par le processeur **39** du contrôleur **37.** Ce changement de consigne CC est effectué selon la procédure suivante, grâce à la programmation décrite précédemment :

- après avoir établi la courbe de soufflage, le contrôleur **37** en fait l'analyse et en extrait les coordonnées du point S singulier (typiquement le point B), et communique ces coordonnées à l'unité **36** de contrôle de l'unité **9** de formage ;
- ayant décrété qu'une modification de la consigne CF de formage est insuffisante pour obtenir la correction souhaitée de la position du point S singulier sur la courbe de soufflage au cycle suivant ou dans un nombre prédéterminé de cycles suivants, l'unité **36** de contrôle communique les coordonnées du point **CS** caractéristique à l'unité **33** centrale de contrôle ;
- l'unité **33** centrale de contrôle, programmée à cet effet, détermine que la courbe de soufflage peut être corrigée grâce à une modification de la température T de chauffe, ou de la vitesse de rotation du ventilateur **17,** ou encore de la vitesse de défilement des préformes **3** (en d'autres termes la vitesse de rotation de la roue **13**) et édicte une consigne CC de chauffe corrigée à l'attention de l'unité **46** de contrôle de l'unité **4** de chauffe ;
- l'unité **33** centrale de contrôle charge la consigne CC de chauffe ainsi corrigée dans l'unité **46** de contrôle de l'unité **4** de chauffe ;
- l'unité **46** de contrôle pilote les contrôleurs **47** en appliquant la consigne CF de chauffe ainsi corrigée.

Cette architecture présente plusieurs avantages.

Premièrement, elle permet de désengorger le système **32** de commande de l'installation en partageant les tâches entre plusieurs niveaux de commande reliés les uns aux autres suivant le principe maître-esclave :

- les contrôleurs **37, 47** sont programmés pour conduire des opérations de bas niveau et sur des temps courts, incluant la commande (analogique) de composants mécaniques ;
- les unités **36, 46** de contrôle sont programmées pour conduire des opérations de niveau intermédiaire et sur des temps relativement plus longs, incluant le calcul de points caractéristiques (notamment des moyennes) en fonction de mesures reçues des contrôleurs **37, 47,** la comparaison avec des valeurs de référence, l'édiction de consignes (éventuellement corrigées) et le pilotage, en fonction de ces consignes, des contrôleurs **37, 47** ;
- l'unité **33** centrale de contrôle est programmée pour conduire des opérations de niveau supérieur et sur des temps longs, incluant la prise en compte de données communiquées par les unités **36, 46** de contrôle, l'édiction de consignes et le pilotage, en fonction de ces consignes, des unités **36, 46** de contrôle.

Deuxièmement, cette architecture permet un dialogue entre les différentes unités **4, 9** de traitement de l'installation 1, sans qu'il soit nécessaire de centraliser l'ensemble des opérations au sein de l'unité **33** centrale de contrôle, à laquelle peuvent ainsi n'être affectées que des tâches de prise de décision, de correction de consignes CF, CC et de chargement des consignes CF, CC corrigées dans les unités **36, 46** de contrôle qui lui sont asservies.

Troisièmement, grâce au dialogue entre les différents niveaux de commande, la programmation de l'ensemble du système **32** de commande peut être centralisée au niveau supérieur, c'est-à-dire dans l'unité **33** centrale de contrôle, qui peut relayer aux unités **36, 46** de contrôle le programme qui leur est dédié ainsi que le programme dédié aux contrôleurs **37, 47,** les unités **36, 46** de contrôle relayant à leur tour aux contrôleurs **37, 47** le programme dédié à ceux-ci. Il n'est donc pas nécessaire de charger les programmes individuellement dans chaque contrôleur **37, 47,** ni même dans chaque unité **36, 46** de contrôle. Il en résulte une simplification de la programmation de l'installation, et une productivité accrue.

Quatrièmement, cette architecture permet de réaliser une rétroaction transversale, c'est-à-dire de commander une modification de la consigne appliquée par une unité de traitement - typiquement l'unité **4** de chauffe - en fonction de mesures effectuées au sein d'une autre unité de traitement - typiquement l'unité **9** de formage. La qualité des récipients produits s'en trouve améliorée.

**Revendications**

1. Installation (**1**) de fabrication de récipients (**2**) à partir d'ébauches (**3**) en matière thermoplastique, cette installation comprenant au moins deux unités (9, 4) de traitement des ébauches (**3**) ou des récipients (**2**), équipée chacune d'au moins un poste (**5, 10**) de traitement des ébauches (**3**) ou des récipients (**2**), l'installation comprenant en outre un système (**32**) de commande **caractérisée en ce que** le système de commande comprend une unité (**33**) centrale de contrôle de l'installation (**1**), au moins deux unités (36, 46) de contrôle asservies à l'unité (33) centrale de contrôle et associées chacune respectivement à une unité (9, 4) de traitement, et au moins deux contrôleurs (37, 47) asservis chacun à une unité (36, 46) de contrôle et associés chacun à un au moins un poste (10, 5) de traitement, l'une des unités de traitement étant une unité (9) de formage comprenant :

    - une roue (23) pivotante sur laquelle sont montés des postes (10) de formage, chaque poste de formage étant muni d'un moule (11) à l'empreinte d'un récipient,
    - un capteur de position angulaire instantanée de la roue (23), et
    - une série de contrôleurs (37) associés aux postes (10) de formage,

**en ce que** l'unité (9) de formage est équipée d'un système (34) de commande dédié qui comprend une unité (36) de contrôle maitre et la série de contrôleurs (37) qui sont esclaves et asservis à l'unité (36) de contrôle maître, et

**en ce que** le capteur (24) est relié, via un réseau informatique local à l'ensemble des contrôleurs (37) de la roue (23), chaque contrôleur étant programmé pour déterminer en temps réel la position angulaire du ou de chaque poste (10) de formage associé au contrôleur (37) et établir une courbe de soufflage à partir de pressions mesurées dans une tuyère de chaque moule aux instants correspondant à chacune des positions angulaires déterminées et en déduire des points singulier (S) communiqués à une fin de cycle à l'unité (36) de contrôle,

et **en ce que** l'unité (36) de contrôle maître est programmée pour prendre une décision quant à l'opportunité de corriger ou non une consigne de formage.

2. Installation (**1**) selon la revendication 2, **caractérisé en ce que** l'unité (**33**) centrale de contrôle est programmée pour :

    piloter chaque unité (**36**) de contrôle asservie selon une consigne (**CF**) de traitement chargée dans l'unité (**36**) de contrôle,
    prendre en compte au moins un point (**CS**) caractéristique communiquée à l'unité (**33**) centrale par l'unité (**36**) de contrôle,
    comparer ce point (**CS**) caractéristique avec un point théorique,
    si un écart est décrété entre le point (**CS**) caractéristique et le point théorique, édicter une consigne (**CC**) de traitement corrigée à destination d'une deuxième unité (**46**) de contrôle,
    charger la consigne (**CC**) de traitement corrigée dans la deuxième unité (**46**) de contrôle.

3. Installation (**1**) selon la revendication 2, **caractérisé en ce que** chaque unité (**36**) de contrôle est programmée pour :

    piloter chaque contrôleur (**37**) asservi selon la consigne (**CF**) de traitement chargée par l'unité (**33**) centrale,
    prendre en compte au moins un point (**S**) singulier issu d'une mesure effectuée sur au moins un poste (**10**) de traitement d'une première unité (**9**) de traitement sur commande d'un contrôleur (**37**),
    calculer un point (**CS**) caractéristique fonction du ou des points (**S**) singuliers,
    comparer le point (**CS**) caractéristique avec un point théorique,
    si un écart est décrété entre le point (**CS**) caractéristique et le point théorique justifiant une modification de la consigne (**CC**) de traitement d'une autre unité (**4**) de traitement, communiquer le point (**CS**) caractéristique à l'unité (**33**) centrale de contrôle.

4. Installation (**1**) selon la revendication 3, **caractérisé en ce que** chaque contrôleur (**37**) est programmé pour :

    piloter au moins un poste (**10**) de traitement selon la consigne (**CF**) de traitement,
    commander au moins une mesure au niveau du poste (**10**) de traitement,
    à partir de cette mesure, établir une courbe décrivant une variation de cette mesure,
    analyser la courbe et en extraire les coordonnées d'un point (**S**) singulier,
    communiquer le point (**S**) singulier à l'unité (**36**) de contrôle.

5. Installation (**1**) selon l'une des revendications précédentes, **caractérisée en ce que** l'une des unités de traitement est une unité (**4**) de chauffe des ébauches (**3**), et une autre unité de traitement est une unité (**9**) de formage équipée d'au moins un poste (**10**) de formage des récipients (**2**) à partir des ébauches (**3**).

**Patentansprüche**

1. Anlage (**1**) zur Herstellung von Containern (**2**) ausgehend von Rohlingen (**3**) aus einem thermoplastischen Material, wobei diese Anlage mindestens zwei Einheiten (9, 4) zur Verarbeitung der Rohlinge (**3**) oder der Container (**2**) beinhaltet, die jeweils mit mindestens einer Station (**5, 10**) zur Verarbeitung der Rohlinge (**3**) oder der Container (**2**) ausgerüstet sind, wobei die Anlage ferner ein Kontrolliersystem (**32**) beinhaltet, **dadurch gekennzeichnet, dass** das Kontrolliersystem eine zentrale Steuereinheit (33) für die Anlage (1), mindestens zwei Steuereinheiten (36, 46), die der zentralen Steuereinheit (33) untergeordnet und jeweils mit einer Verarbeitungseinheit (9, 4) assoziiert sind, und mindestens zwei Steuereinrichtungen (37, 47), die jeweils einer Steuereinheit (36, 46) untergeordnet und jeweils mit mindestens einer Verarbeitungsstation (10, 5) assoziiert sind, beinhaltet, wobei eine der Verarbeitungseinheiten eine Formungseinheit (9) ist, die Folgendes beinhaltet:

    - eine Drehscheibe (23), an der Formungsstationen (10) angebracht sind, wobei jede Formungsstation über eine Form (11) mit dem Abdruck eines Containers verfügt,
    - einen Sensor für die momentane Winkelposition der Scheibe (23) und
    - eine Reihe von Steuereinrichtungen (37), die mit den Formungsstationen (10) assoziiert sind,

dass die Formungseinheit (9) mit einem dedizierten Kontrolliersystem (34) ausgerüstet ist, das eine Master-Steuereinheit (36) und die Reihe von Steuereinrichtungen (37), die als Slaves dienen und der Master-Steuereinheit (36) untergeordnet sind, beinhaltet, und
dass der Sensor (24) über ein lokales Rechnernetzwerk mit der Gesamtheit der Steuereinrichtungen (37) der Scheibe (23) verbunden ist, wobei jede Steuereinrichtung dazu programmiert ist, die Winkelposition der oder von jeder Formungsstation (10), die mit der Steuereinrichtung (37) assoziiert ist, in Echtzeit zu bestimmen und anhand von Drücken, die in einer Düse jeder Form zu Zeitpunkten, die jeder der bestimmten Winkelpositionen entsprechen, gemessen werden, eine Blaskurve zu erstellen und daraus singuläre Punkte (S) abzuleiten, die zum Ende eines Zyklus an die Steuereinheit (36) kommuniziert werden, und dass die Master-Steuereinheit (36) dazu programmiert ist, eine Entscheidung bezüglich der Zweckmäßigkeit, einen Formungssollwert zu korrigieren oder nicht, zu treffen.

2.   Anlage (1) nach Anspruch 2, **dadurch gekennzeichnet, dass** die zentrale Steuereinheit (33) für Folgendes programmiert ist:

    Ansteuern jeder untergeordneten Steuereinheit (36) gemäß einem Verarbeitungssollwert (**CF**), der in die Steuereinheit (36) geladen wird,
    Berücksichtigen mindestens eines charakteristischen Punktes (CS), der durch die Steuereinheit (36) an die zentrale Einheit (33) kommuniziert wird,
    Vergleichen dieses charakteristischen Punktes (CS) mit einem Sollpunkt,
    wenn zwischen dem charakteristischen Punkt (CS) und dem Sollpunkt eine Abweichung festgestellt wird, Ausgeben eines korrigierten Verarbeitungssollwerts (CC) an eine zweite Steuereinheit (**46**),
Laden des korrigierten Verarbeitungssollwerts (CC) in die zweite Steuereinheit (**46**).

3.   Anlage (**1**) nach Anspruch 2, **dadurch gekennzeichnet, dass** jede Steuereinheit (36) für Folgendes programmiert ist:

    Ansteuern jeder untergeordneten Steuereinrichtung (**37**) gemäß dem Verarbeitungssollwert (**CF**), der durch die zentrale Einheit (**33**) geladen wird,
    Berücksichtigen mindestens eines singulären Punktes (S), der aus einer Messung stammt, die auf Veranlassung einer Steuereinrichtung (**37**) an mindestens einer Verarbeitungsstation (**10**) einer ersten Verarbeitungseinheit (**9**) ausgeführt wird,
    Berechnen eines charakteristischen Punktes (CS) in Abhängigkeit von dem oder den singulären Punkten (S), Vergleichen des charakteristischen Punktes (CS) mit einem Sollpunkt,
    wenn zwischen dem charakteristischen Punkt (CS) und dem Sollpunkt eine Abweichung festgestellt wird, die eine Modifikation des Verarbeitungssollwerts (CC) einer anderen Verarbeitungseinheit (**4**) rechtfertigt, Kommunizieren des charakteristischen Punktes (CS) an die zentrale Steuereinheit (**33**).

4.   Anlage (**1**) nach Anspruch 3, **dadurch gekennzeichnet, dass** jede Steuereinrichtung (**37**) für Folgendes programmiert ist:

    Ansteuern mindestens einer Verarbeitungsstation (**10**) gemäß dem Verarbeitungssollwert (**CF**),
    Veranlassen mindestens einer Messung an der Verarbeitungsstation (**10**),
    ausgehend von dieser Messung, Erstellen einer Kurve, die eine Variation dieser Messung beschreibt,
    Analysieren der Kurve und Extrahieren der Koordinaten eines singulären Punktes (**S**) aus dieser,
    Kommunizieren des singulären Punktes (**S**) an die Steuereinheit (**36**).

5.   Anlage (**1**) nach einem der vorhergehenden Ansprüche, **dadurch gekennzeichnet, dass** eine der Verarbeitungseinheiten eine Heizeinheit (**4**) für die Rohlinge (**3**) ist und eine andere Verarbeitungseinheit eine Formungseinheit (**9**) ist, die mit mindestens einer Station (**10**) zur Formung der Container (**2**) ausgehend von den Rohlingen (**3**) ausgerüstet ist.

## Claims

1. Installation (1) for manufacturing containers (2) from semi-finished products (3) made of thermoplastic, this installation comprising at least two units (9, 4) for treating the semi-finished products (3) or the containers (2), each one equipped with at least one workstation (5, 10) for treating the semi-finished products (3) or the containers (2), the installation further comprising a control system (32), **characterized in that** the control system comprises a central control unit (33) for controlling the installation (1), at least two control units (36, 46) slaved to the central control unit (33) and each one respectively associated with a treatment unit (9, 4), and at least two controllers (37, 47) each slaved to a control unit (36, 46) and each associated with at least one treatment workstation (10, 5), one of the treatment units being a forming unit (9) comprising:

   - a pivoting wheel (23) on which forming workstations (10) are mounted, each forming workstation being equipped with a mould (11) with the impression of a container,
   - a sensor of the instantaneous angular position of the wheel (23), and
   - a series of controllers (37) associated with the forming workstations (10),

   **in that** the forming unit (9) is equipped with a dedicated control system (34) which comprises a master control unit (36) and the series of controllers (37) which are slave controllers slaved to the master control unit (36), and **in that** the sensor (24) is connected, via a local area computer network to the set of controllers (37) of the wheel (23), each controller being programmed to determine, in real time, the angular position of the or of each forming workstation (10) associated with that controller (37) and to establish a blowing curve on the basis of pressures measured in a nozzle of each mould at the instants corresponding to each of the determined angular positions and from that deduce singular points (S) which are communicated at the end of a cycle to the control unit (36),
   and **in that** the master control unit (36) is programmed to make a decision as to whether or not it is opportune to correct a forming setpoint.

2. Installation (1) according to Claim 2, **characterized in that** the central control unit (33) is programmed to:

   operate each slaved control unit (36) on the basis of a treatment setpoint (CF) loaded into the control unit (36),
   take account of at least one characteristic point (CS) communicated to the central unit (33) by the control unit (36),

   compare this characteristic point (CS) against a theoretical point,
   if a discrepancy between the characteristic point (CS) and the theoretical point is declared, issue a corrected treatment setpoint (CC) intended for a second control unit (46),

   - load the corrected treatment setpoint (CC) into the second control unit (46).

3. Installation (1) according to Claim 2, **characterized in that** each control unit (36) is programmed to:

   operate each slaved controller (37) on the basis of the treatment setpoint (CS) loaded by the central unit (33), take account of at least one singular point (S) originating from a measurement made at at least one treatment workstation (10) of a first treatment unit (9) on the command of a controller (37),
   calculate a characteristic point (CS) dependent on the singular point or points (S),
   compare the characteristic point (CS) against a theoretical point,
   if a discrepancy between the characteristic point (CS) and the theoretical point that justifies a modification to the treatment setpoint (CC) of another treatment unit (4) is declared, communicate the characteristic point (CS) to the central control unit (33).

4. Installation (1) according to Claim 3, **characterized in that** each controller (37) is programmed to:

   operate at least one treatment workstation (10) on the basis of the treatment setpoint (CF),
   command at least one measurement at the treatment workstation (10),
   on the basis of this measurement, establish a curve describing a variation in this measurement,
   analyse the curve and from it extract the coordinates of a singular point (S),
   communicate the singular point (S) to the control unit (36).

5. Installation (1) according to one of the preceding claims, **characterized in that** one of the treatment units is a unit (4) for heating the semi-finished products (3), and another treatment unit is a forming unit (9) equipped with at least one forming workstation (10) for forming the containers (2) from the semi-finished products (3).

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008081107 A
- WO 2012035260 A
- WO 9711415 A
- WO 2006089451 A
- US 2008097626 A
- US 2010176528 A

**Littérature non-brevet citée dans la description**

- **W. BOLTON.** Programmable Logic Controllers. 2009